# EUROPEAN PATENT SPECIFICATION

(11) **EP 2 223 603 B1**
(45) Date of publication and mention of the grant of the patent: **30.10.2013**
(21) Application number: 10154166.2
(22) Date of filing: 19.02.2010
(51) Int. Cl.: A21B 5/02, A21B 7/00, A21C 9/06, A21C 9/08

(54) **Automatic egg roll making machine**
Automatische Maschine zur Frühlingsrollenherstellung
Machine de fabrication de pâté impérial automatique

(30) Priority: 25.02.2009 TW 098202820
(43) Date of publication of application: 01.09.2010
(73) Proprietor: Lin, Kuan-Tsung, Dali City T'ai chung (TW); Lin, Chia-Ching, Dali City T'ai chung (TW); Lin, Hsin-Yu, Dali City T'ai chung (TW)
(72) Inventor: Lin, Kuan-Tsung, Taichung County (TW)
(74) Representative: Anderson, James Edward George

(56) References cited:
- GB-A- 1 537 452
- JP-A- 2001 120 244
- US-A- 1 305 183
- US-A- 3 633 517
- US-A- 4 388 059
- US-A- 4 457 218

## Description

This invention relates to food making equipment, and more particularly to a fully automatic egg roll making machine.

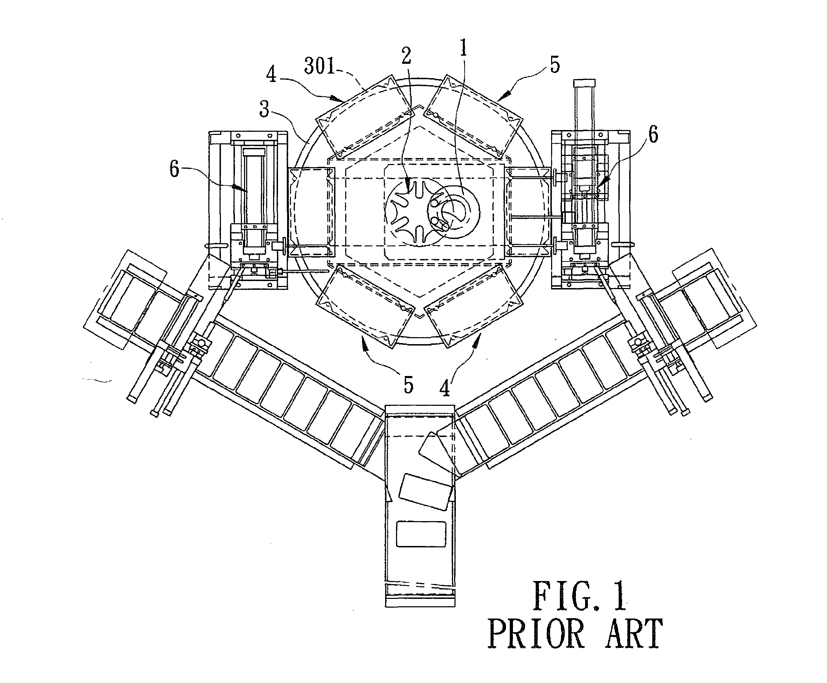

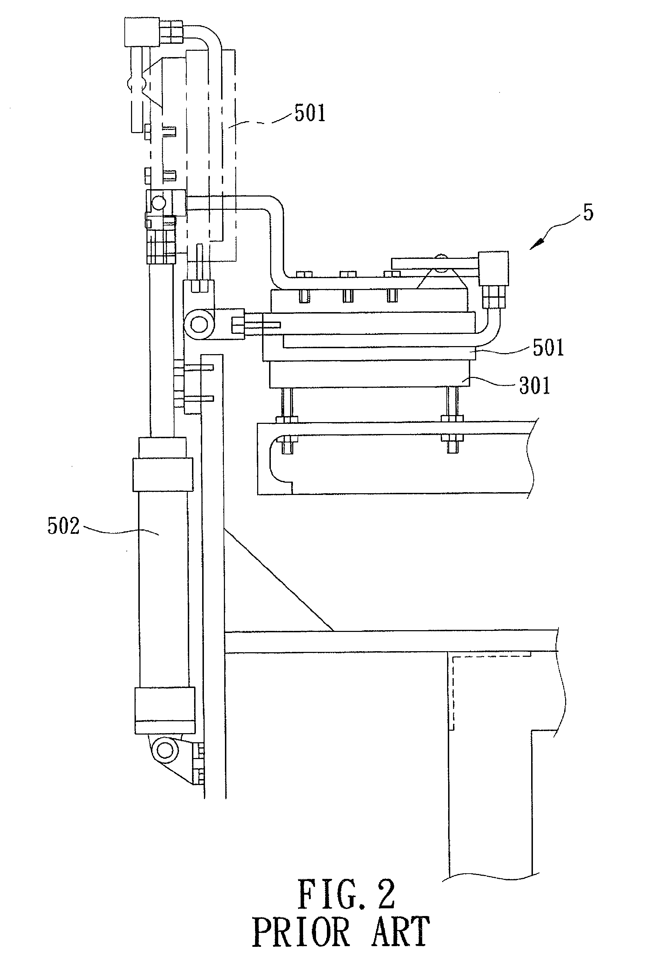

Referring to Figs. 1 and 2, a conventional automatic egg roll making machine disclosed in Taiwanese Utility Model Publication No. M369660 by the applicant includes a driving motor 1, a Geneva drive mechanism 2 driven by the driving motor 1, an upper seat 3 connected to the Geneva drive mechanism 2, a pair of material-pouring units 4 each disposed adjacent to a periphery of the upper seat 3 and immediately downstream of a respective one of the material-pouring units 3, a pair of baking units 5 each disposed adjacent to the periphery of the upper seat 3 and immediately downstream of a respective one of the material-pouring units 4, and a pair of wrapping units 6 each disposed adjacent to the periphery of the upper seat 3 and immediately downstream of a respective one of the baking units 5. A plurality of lower frying trays 301 are disposed fixedly on the periphery of the upper seat 3. Each of the baking units 5 includes an upper frying tray 501, and a pressure cylinder 502. When one of the lower frying trays 301 is rotated to a position under the upper frying tray 501, the pressure cylinder 502 is operated to move the upper frying tray 501 toward and away from the one of the lower frying trays 301.

Publication US 4388059 discloses an automatic egg roll making machine. Furthermore, publication US 1305183 discloses a pastry baking machine comprising a rotary disk having a plurality of equidistant lower baking trays and publication US 4457218 discloses a baking machine for ice cream cones and the like.

A drawback encountered by the aforesaid conventional automatic egg roll making machine is that, during the baking operation, baked dough is easily stuck on the upper frying trays 501, and if a portion of the baked dough is stuck on one of the upper frying trays 501, the egg roll making operation of the machine must be interrupted for cleaning the one of the upper frying trays 501, thereby reducing the production capacity of the machine.

The object of this invention is to provide a fully automatic egg roll making machine that includes a baking unit configured to allow baked dough stuck thereon to be removed without interrupting the egg roll making operation of the machine.

Accordingly, a fully automatic egg roll making machine of this invention comprises:
a machine bed;
a loading device including a rotary disk disposed rotatably on the machine bed, a plurality of equidistant lower frying trays disposed on the rotary disk, and a driving unit operable for driving intermittent rotation of the rotary disk on the machine bed in a predetermined direction;
a material-pouring unit disposed adjacent to a periphery of the rotary disk for pouring a dough material onto one of the lower frying trays when the one of the lower frying trays is rotated relative to the machine bed to a position aligned with the material-pouring unit;
a baking unit disposed adjacent to the periphery of the rotary disk and immediately downstream of the material-pouring unit for baking the dough material on the one of the lower frying trays when the one of the lower frying trays is rotated relative to the machine bed to be aligned with the baking unit; and
a wrapping unit disposed adjacent to the periphery of the rotary disk and immediately downstream of the baking unit and operable to allow the sheet to form an egg roll product when the one of the lower frying trays is rotated relative to the machine bed to a position aligned with the wrapping unit;
   characterized by the baking unit including two upper frying trays rotatable relative to the machine bed such that, when the one of the lower frying trays is rotated to a position aligned with the baking unit, one of the upper frying trays is rotated to a standby position disposed directly above the one of the lower frying trays to subsequently move to a working position so as to abut against the one of the lower frying trays to thereby allow the dough material to be baked, thus forming a baked dough sheet, after which the one of the upper frying trays is returned to the standby position, and the other one of the upper frying trays is rotated to a non-working position that is misaligned from and away from the one of the lower frying trays.

Since the baking unit includes the two upper frying trays, when one of the upper frying trays is disposed at the working position for performing a baking operation, the other one of the upper frying trays is disposed at the non-working position to thereby allow baked dough stuck thereon to be removed. Consequently, when a portion of baked dough is truck on either of the upper frying trays, it can be removed without interrupting the egg roll making operation of the machine.

These and other features and advantages of this invention will become apparent in the following detailed description of a preferred embodiment of this invention, with reference to the accompanying drawings, in which:
Fig. 1 is a top view of a conventional automatic egg roll making machine disclosed in Taiwanese Utility Model Publication No. M369660;
Fig. 2 is a side view of a baking unit and a lower frying tray of the conventional automatic egg roll making machine;
Fig. 3-1 is a top view of the preferred embodiment of an automatic egg roll making machine according to this invention, illustrating two mounting seats each disposed at a first position;
Fig. 3-2 is a view similar to Fig. 3-1 but illustrating the mounting seats each disposed at a second position;
Fig. 4 is a sectional view taken along line IV-IV in Fig. 3-1;
Fig. 5 is a fragmentary side view of the preferred embodiment, illustrating a baking unit;
Fig. 6 is a sectional view taken along line VI-VI in Fig. 3-1;
Fig. 7 is a sectional view taken along line VII-VII in Fig. 6;
Fig. 8 is a sectional view taken along line VIII-VIII in Fig. 7;
Fig. 9 is a sectional view taken along line IX-IX in Fig. 8; and
Fig. 10 is a fragmentary schematic view of the preferred embodiment, illustrating operation of a lifting device.

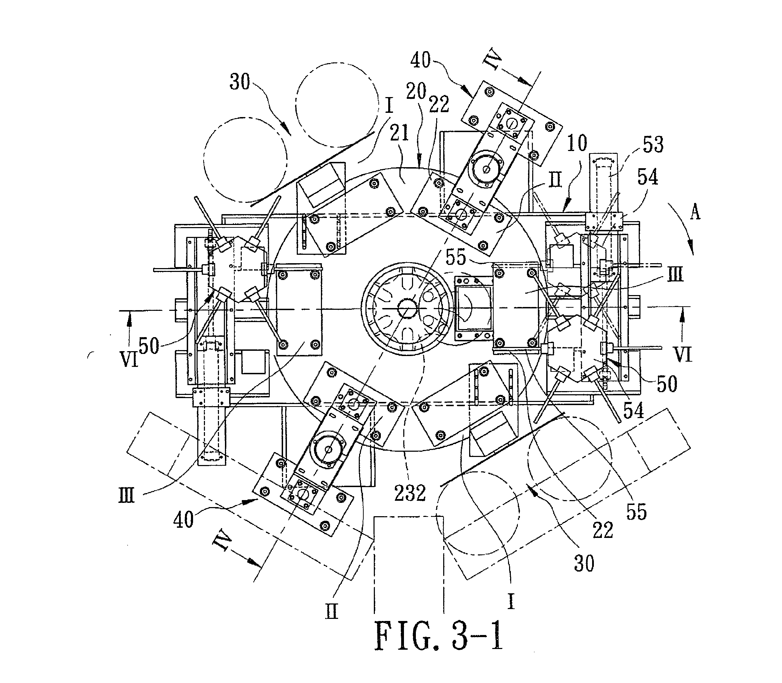

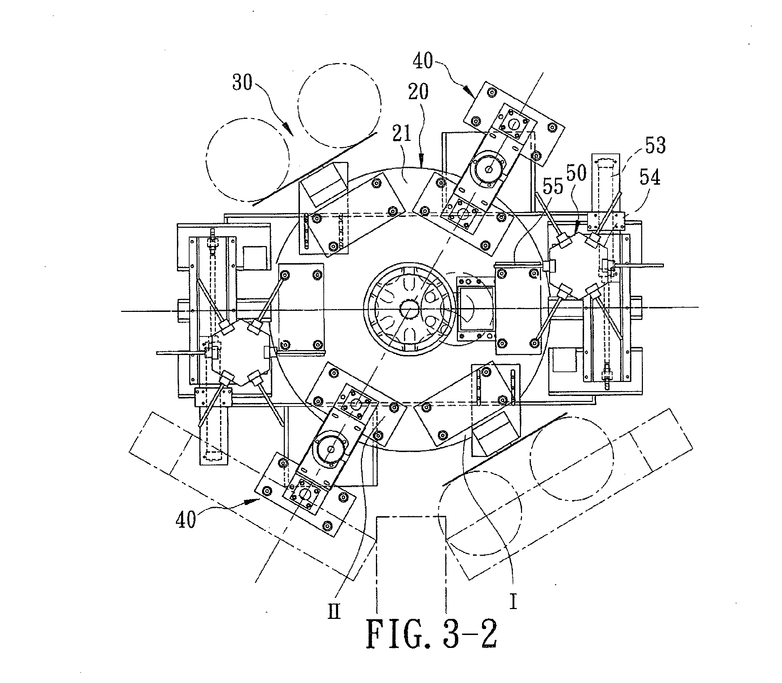

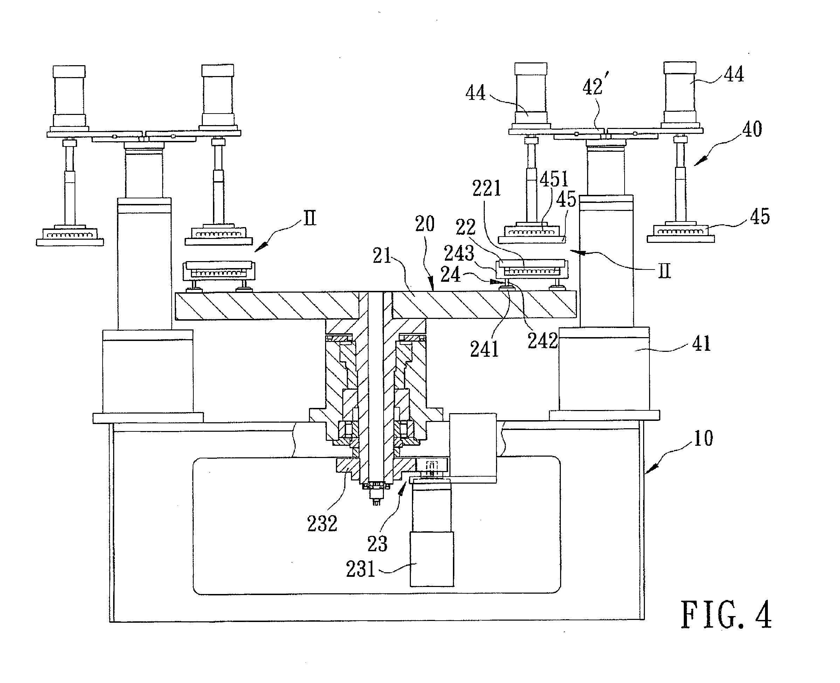

Referring to Figs. 3-1, 3-2, and 4, the preferred embodiment of an automatic egg roll making machine according to this invention includes a machine bed 10, a loading device 20 disposed on the machine bed 10, a pair of material-pouring units 30 disposed adjacent to a periphery of the loading device 20, a pair of baking units 40 each disposed adjacent to the periphery of the loading device 20 and immediately downstream of a respective one of the material-pouring units 20, a pair of wrapping units 50 each disposed adjacent to the periphery of the loading device 20 and immediately downstream of a respective one of the baking units 40, and a pair of lifting units 60 aligned respectively with the wrapping units 50.

The machine bed 10 is defined to include two diametrically opposed material-pouring workstations (I), two diametrically opposed baking workstations (II) each disposed immediately downstream of a respective one of the material-pouring workstations (I), and two diametrically opposed wrapping workstations (III) each disposed immediately downstream of a respective one of the baking workstations (II).

The loading device 20 includes a rotary disk 21 disposed rotatably on and above the machine bed 10, a plurality of equidistant lower frying trays 22 disposed fixedly on a periphery of a top surface of the rotary disk 21, a driving unit 23, and a plurality of heat-insulating units 24 disposed between the rotary disk 21 and the lower frying trays 22. Each of the lower frying trays 22 is provided with a heating wire 221 therein. The driving unit 23 includes a motor 231 and a Geneva drive mechanism 232 driven by the motor 231 to rotate the rotary disk 21 intermittently in a clockwise direction (A) (see Fig. 3-1). Each of the heat-insulating units 24 includes a plurality of bakelite blocks 241 disposed fixedly on the rotary disk 21, a plurality of supporting posts 242 disposed respectively and fixedly on the bakelite blocks 241, and a loading seat 243 disposed fixedly on the support posts 242 for supporting the corresponding lower frying tray 22. With the inclusion of the heat-insulating units 24 in the machine, power consumption can be reduced. The dough material can be poured onto the two lower frying trays 22 disposed respectively at the material-pouring workstations (I) by the material-pouring units 30, respectively.

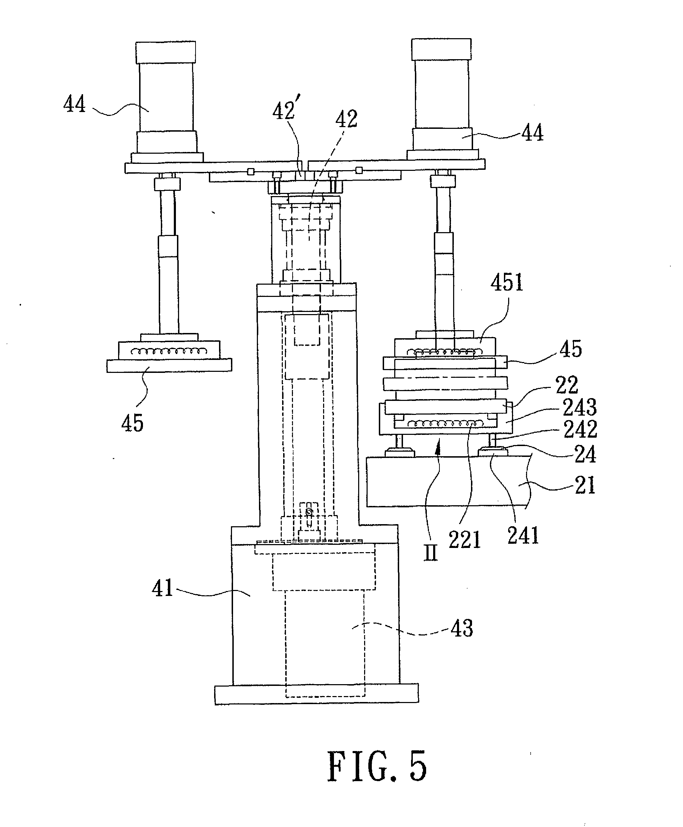

With further reference to Fig. 5, when the two lower frying trays 22 are moved into the baking workstations (II), respectively, they are aligned with the baking units 40, respectively, so that the dough materials can be baked to form two baked dough sheets on the two lower frying trays 22, respectively. One of the baking units 40 will be described in the succeeding paragraph.

The baking unit 40 includes a positioning seat 41 disposed fixedly on the machine bed 10, an upright rotating shaft 42 journalled within the positioning seat 41, a driving member 43 disposed within a bottom end portion of the positioning seat 41 for driving rotation of the rotating shaft 42 relative to the positioning seat 41, an elongated cylinder-mounting member 42' connected fixedly to an upper end of the rotating shaft 42, two pressure cylinders 44 disposed respectively and fixedly on and above the cylinder-mounting member 42', and two upper frying trays 45 disposed under the cylinder-mounting member 42' and located respectively at two opposite sides of the rotating shaft 42. Each of the pressure cylinders 44 is connected to a respective one of the upper frying trays 45 for driving movement of the same between a standby position shown by the solid lines in Fig. 5 whereat the corresponding upper frying tray 45 is disposed spacedly above the corresponding lower frying tray 22, and a working position shown by the phantom lines in Fig. 5 whereat the corresponding upper frying tray 45 abuts against the corresponding lower frying tray 22 to allow for a baking operation performed on the dough material disposed between the corresponding upper and lower frying trays 45, 22. When any one of the lower frying trays 22 is rotated to a position aligned with the baking unit 40 (i.e., into the corresponding baking workstation (II), the rotating shaft 42 is rotated to a position so that one of the upper frying trays 45 is disposed at the standby position, and the other one of the upper frying trays 45 is disposed at a non-working position and outwardly of the rotary disk 21, as shown in Fig. 4. Each of the upper frying trays 45 is provided with a heating wire 451 therein. After the baking operation, the one of the upper frying trays 45 is moved from the working position to the standby position under an automatic control.

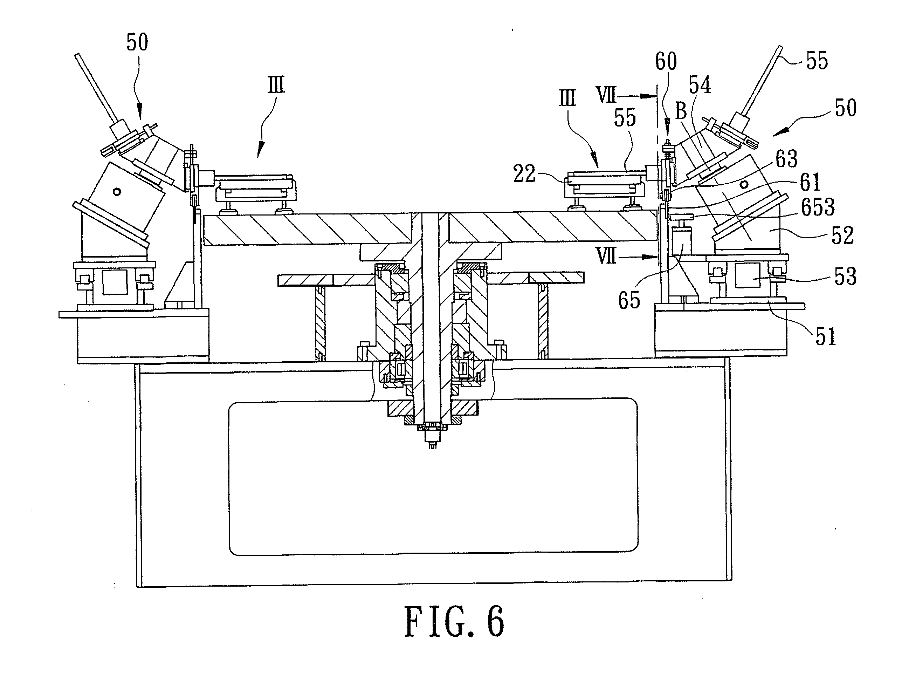

With further reference to Fig. 6, each of the wrapping units 50 is used to perform a wrapping operation on the sheet disposed on the lower frying tray 22 at the corresponding wrapping workstation (III), so as to form an egg roll product. One of the wrapping units 50 will be described in the succeeding paragraph.

The wrapping unit 50 includes a mounting seat 51 disposed fixedly on the machine bed 10, a sliding seat 52 disposed movably on the mounting seat 51, a driving member 53 for driving the sliding seat 52 to move horizontally on the mounting seat 51, a rotating seat 54 disposed rotatably on the sliding seat 52 and rotatable about an inclined axis (B) (see Fig. 6), and a plurality of equidistant rolling rods 55 journalled on the rotating seat 54 and extending radially with respect to the inclined axis

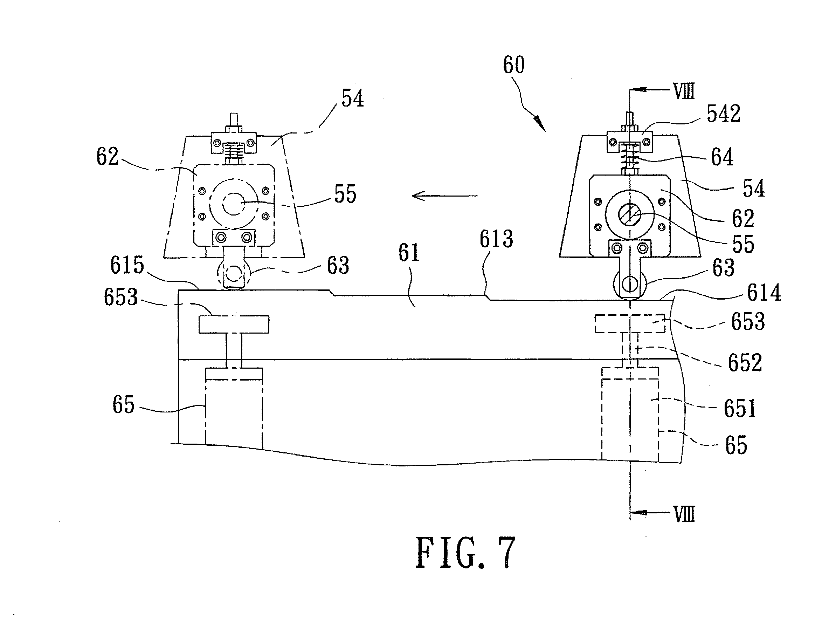

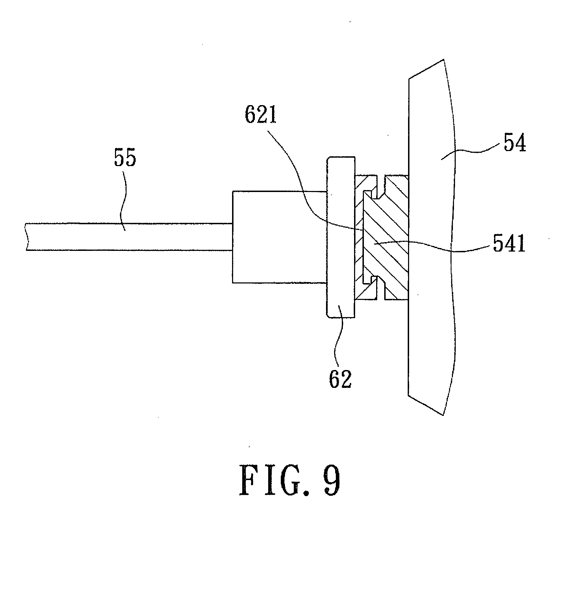

(B). The sliding seat 52 is driven by the driving member 53 to move the assembly of the sliding seat 52, the rotating seat 54, and the rolling rods 55 between a first position shown in Fig. 3-1 and by the solid lines in Fig. 7, and a second position shown in Fig. 3-2 and by the phantom lines in Fig. 7. During movement of assembly of the sliding seat 52, the rotating seat 54, and the rolling rods 55 from the first position to the second position, due to frictional contact between the sheet and one of the rolling rods 55, the sheet is wrapped around the one of the rolling rods 55 to form the egg roll product. The rotating seat 54 includes a dovetail tongue 541 (see Fig. 9) and a stop block 542 disposed directly above and adjacent to the dovetail tongue 541.

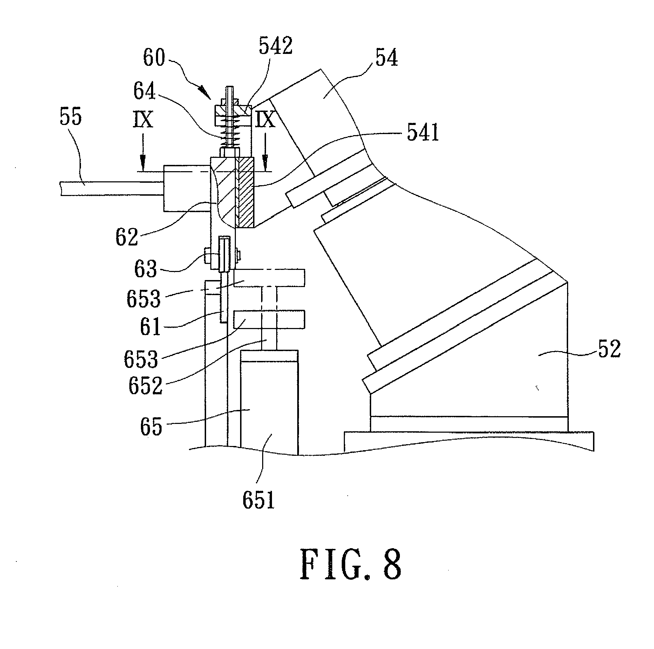

With further reference to Figs. 7, 8, and 9, one of the lifting units 60 will be described in this paragraph. The lifting unit 60 includes a guiding plate 61 disposed fixedly on the mounting seat 51, a plurality of positioning members 62 disposed slidably on the rotating seat 54 and permitting the rolling rods 55 to be journalled respectively thereon, a plurality of guiding rollers 63 disposed respectively and pivotally on bottom ends of the positioning members 62, a plurality of springs 64 for biasing the guiding rollers 63 respectively to move one of the rolling rods 55 into contact with an assembly of the sheet and one of the lower frying trays 22, and a pressure cylinder 65 disposed on the sliding seat 52 and operable for removing the one of the rolling rods 55 from the assembly of the sheet and the one of the lower frying trays 22. The guiding plate 61 has a stepped guiding surface 613. The guiding surface 613 has a first end 614 corresponding to the first position, and a second end 615 opposite to and disposed above the first end 614 and corresponding to the second position. The guiding rollers 63 are movable on the guiding surface 613 one at a time. Each of the sliding seats 62 is formed with a dovetail groove 621 engaging the dovetail tongue 541 of the corresponding rotating seat 54 to allow for vertical movement of the corresponding sliding seat 52 and, thus, the one of the rolling rods 55 relative to the rotating seat 54. Each of the springs 64 is disposed between the corresponding stop block 542 and the corresponding positioning member 62. The pressure cylinder 65 has a cylinder body 651 connected fixedly to the corresponding sliding seat 52, a piston rod 652 connected movably to and extending upwardly from the cylinder body 651, and a pushing block 653 disposed fixedly on a top end of the piston rod 652.

For convenience of illustration, operation of one of the lower frying trays 22, one of the material-pouring workstations (I), one of the baking workstations (II), one of the wrapping workstations (III), one of the material-pouring units 30, one of the baking units 40, one of the wrapping units 50, and one of the lifting units 60 will be described in the succeeding paragraphs.

With particular reference to Figs. 3-1 and 4, in use, upon actuation of the driving unit 23, the rotary disk 21 together with the lower frying tray 22 rotate. When the lower frying tray 22 is rotated into the material-pouring workstation (I), the rotary disk 21 is stopped, followed by pouring a dough material from the material-pouring unit 30 onto the lower frying tray 22.

The rotary disk 21 is then driven again to rotate the lower frying tray 22 into the baking workstation (II), as shown in Figs. 4 and 5. When the lower frying tray 22 is rotated into the baking workstation (II) to align with the baking unit 40, one of the upper frying trays 45 is disposed at a standby position (shown by the solid lines in Fig. 5) directly above the lower frying tray 22, and the other one of the upper frying trays 45 is disposed at a non-working position that is misaligned from and away from the lower frying tray 22. Thereafter, the one of the upper frying trays 45 disposed directly above the lower frying tray 22 is moved downwardly by the pressure cylinder 44 to a working position (shown by the phantom lines in Fig. 5). In the working position, the one of the upper frying trays 45 abuts against the lower frying tray 22, and the heating wires 221, 451 are energized to allow the dough material disposed therebetween to be baked for a predetermined time period to thereby form a baked dough sheet. Subsequent to the formation of the sheet, the one of the upper frying trays 45 is returned to the standby position by the pressure cylinder 44.

The lower frying tray 22 loaded with the sheet is driven by the driving unit 23 into the wrapping workstation (III). In the wrapping unit (III), an assembly of the sliding seat 52, the rotating seat 54, and the rolling rods 55 is moved by the driving member 53 from the first position to the second position. Hence, the sheet is wrapped around one of the rolling rods 55 due to frictional contact therebetween, so as to form an egg roll product. Since the thickness of the egg roll is increased gradually During wrapping of the sheet around the one of the rolling rods 55, to maintain the frictional contact between the sheet and the one of the rolling rods 55, the guiding surface 613 of the guiding plate 61 is stepped, and the sliding seat 62 is biased downwardly by the spring 64 to allow the guiding roller 63 to abut against the guiding surface 613 of the guiding plate 61.

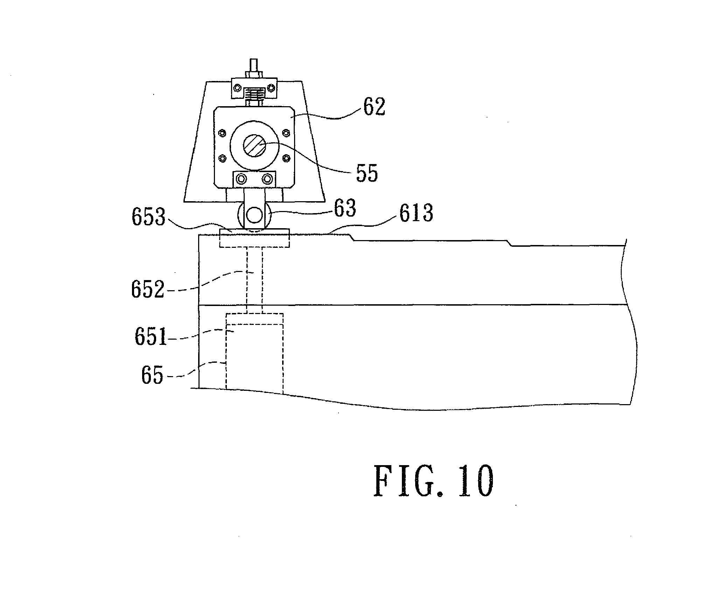

After the egg roll product is formed, the rotating seat 54 is rotated by 60 degrees to separate the egg roll product from the lower frying tray 22, thereby facilitating removal of the egg roll product from the one of the rolling rods 55. Subsequently, the pushing block 653 and the piston rod 652 are moved upwardly away from the cylinder body 651 to remove the guiding roller 63 from the guiding surface 613, as shown in Fig. 10, and the assembly of the sliding seat 52, the rotating shaft 54, and the rolling rods 55 is returned from the second position to the first position. As such, contact between the lower frying tray 22 and the rolling rods 55 can be prevented during movement of the assembly of the sliding seat 52, the rotating seat 54, and the rolling rods 55 from the second position to the first position. When the assembly of the sliding seat 52, the rotating shaft 54, and the rolling rods 55 reaches the first position, the pushing block 653 and the piston rod 652 are moved downwardly toward the cylinder body 651 so that the guiding roller 63 is biased by the spring 64 to move into contact with the guiding surface 613, thereby allowing for a subsequent egg roll making operation.

During rotation of any of the lower frying trays 22 from one of the baking units 40 into the other one of the baking units 40, for each of the baking units 40, the rotating shaft 42 is driven to exchange the positions of the upper frying trays 45, so that baked dough stuck on either of the upper frying trays 45 can be easily removed.

In view of the above, by cooperation of the loading device 20 with the material-pouring units 30, the baking units 40, and the wrapping units 50 under an automatic control, a fully automatic egg roll making process can be performed. Furthermore, since each of the baking units 40 includes two upper frying trays 45 that can be used alternately for baking, during a baking operation, one of the upper frying trays 45 is disposed at the non-working position and outwardly of the rotary disk 21, and can be cleaned easily and conveniently without interrupting the egg roll making operation, thereby promoting the production capacity of the machine.

## Claims

1. A fully automatic egg roll making machine comprising:
a machine bed (10);
a loading device (20) including a rotary disk (21) disposed rotatably on said machine bed (10), a plurality of equidistant lower frying trays (22) disposed on said rotary disk (21), and a driving unit (23) operable for driving intermittent rotation of said rotary disk (21) on said machine bed (10) in a predetermined direction (A);
a material-pouring unit (30) disposed adjacent to a periphery of said rotary disk (21) for pouring a dough material onto one of said lower frying trays (22) when the one of said lower frying trays (22) is rotated relative to said machine bed (10) to a position aligned with said material-pouring unit (30);
a baking unit (40) disposed adjacent to said periphery of said rotary disk (21) and immediately downstream of said material-pouring unit (30) for baking the dough material on the one of said lower frying trays (22) to form a baked dough sheet when the one of said lower frying trays (22) is rotated relative to said machine bed (10) to be aligned with said baking unit (40); and
a wrapping unit (50) disposed adjacent to said periphery of said rotary disk (21) and immediately downstream of said baking unit (40) and operable to allow said sheet to form an egg roll product when the one of said lower frying trays (22) is rotated relative to said machine bed (10) to a position aligned with said wrapping unit (50);
**characterized by** said baking unit (40) including two upper frying trays (45) rotatable relative to said machine bed (10) such that, when the one of said lower frying trays (22) is rotated to a position aligned with said baking unit (40), one of said upper frying trays (45) is rotated to a standby position disposed directly above the one of said lower frying trays (22) to subsequently move to a working position so as to abut against the one of said lower frying trays (22) to thereby allow the dough material to be baked, thus forming the baked dough sheet, after which the one of said upper frying trays (45) is returned to the standby position, and the other one of said upper frying trays (45) is rotated to a non-working position that is misaligned from and away from the one of said lower frying trays (22).

2. The fully automatic egg roll making machine as claimed in Claim 1, **characterized in that** said baking unit (40) further includes a positioning seat (41) disposed fixedly on said machine bed (10), and an upright rotating shaft (42) journalled within said positioning seat (41), said upper frying trays (45) being disposed respectively at two opposite sides of said rotating shaft (42).

3. The fully automatic egg roll making machine as claimed in Claim 2, further **characterized in that** said baking unit (40) further includes a driving member (43) for driving rotation of said rotating shaft (42) relative to said positioning seat (41).

4. The fully automatic egg roll making machine as claimed in Claim 3, further **characterized in that** said baking unit (40) further includes a cylinder-mounting member (42') connected fixedly to an upper end of said rotating shaft (42), and two pressure cylinders (44) each disposed on said cylinder-mounting member (42') for driving movement of a respective one of said upper frying trays (45) between said standby position and said working position.

5. The fully automatic egg roll making machine as claimed in any preceding claim, **characterized in that** said driving unit (23) includes a Geneva drive mechanism (232) for driving intermittent rotation of said rotary disk (21) relative to said machine bed (10), and a motor (231) for driving said Geneva drive mechanism (232).

6. The fully automatic egg roll making machine as claimed in any preceding claim, **characterized in that** said loading device (20) further includes a plurality of heat-insulating units (24) disposed between said rotary disk (21) and said lower frying trays (22), each of said heat-insulating units (24) including a plurality of bakelite blocks (241) disposed fixedly on said rotary disk (21), a plurality of supporting posts (242) disposed respectively and fixedly on said bakelite blocks (241), and a loading seat (243) disposed fixedly on said supporting posts (242) for supporting a corresponding one of said lower frying trays (22)

7. The fully automatic egg roll making machine as claimed in any preceding claim, **characterized in that** each of said upper frying trays (45) is disposed outwardly of said rotary disk (21) when at the non-working position.

8. The fully automatic egg roll making machine as claimed in any preceding claim, **characterized in that** said wrapping unit (50) includes:
a mounting seat (51) disposed fixedly on said machine bed (10);
a sliding seat (52) disposed movably on said mounting seat (51);
a driving member (53) for driving said sliding seat (52) to move horizontally on said mounting seat (51);
a rotating seat (54) disposed rotatably on said sliding seat (52) and rotatable about an inclined axis (B), said rotating seat (54) being co-movable with said sliding seat (52) relative to said mounting seat (51); and
a plurality of equidistant rolling rods (55) journalled on said rotating seat (54) and extending radially with respect to the inclined axis such that an assembly of said sliding seat (52), said rotating seat (54), and said rolling rods (55) is movable relative to said mounting seat (51) between first and second positions, movement of the assembly of said sliding seat (52), said rotating seat (54), and said rolling rods (55) from the first position to the second position resulting in formation of the egg roll product from said sheet when said sheet is in frictional contact with one of said rolling rods (55).

9. The fully automatic egg roll making machine as claimed in Claim 8, further comprising a lifting unit (60) that includes:
a guiding plate (61) disposed fixedly on said mounting seat (51) and having a stepped guiding surface (613), said guiding surface (613) having a first end (614) corresponding to the first position, and a second end (615) opposite to and disposed above said first end (614) and corresponding to the second position;
a plurality of positioning members (62) disposed slidably on said rotating seat (54) and permitting said rolling rods (55) to be disposed journalled respectively thereon;
a plurality of guiding rollers (63) disposed respectively and pivotally on bottom ends of said positioning members (62), said guiding rollers (63) being movable on said guiding surface (513) one at a time; and
a plurality of springs (64) for biasing said guiding rollers (63) respectively to move the one of said rolling rods (55) into contact with an assembly of said sheet and the one of said lower frying trays (22).

10. The fully automatic egg roll making machine as claimed in Claim 9, further **characterized in that** said lifting unit (60) further includes a pressure cylinder (65) disposed on said sliding seat (52) and operable for removing the one of said rolling rods (55) from the one of said lower frying trays (22) just before the assembly of said sliding seat (52), said rotating seat (54), and said rolling rods (55) is moved from said second position to said first position.

## Patentansprüche

1. Vollautomatische Frühlingsrollen-Herstellungsmaschine, die Folgendes umfasst:
ein Maschinenbett (10),
eine Ladevorrichtung (20), die eine Drehscheibe (21), die drehbar auf dem Maschinenbett (10) angeordnet ist, mehrere untere Bratschalen (22) in gleichem Abstand, die auf der Drehscheibe (21) angeordnet sind, und eine Antriebseinheit (23), die funktionsfähig ist, um eine intermittierende Drehung der Drehscheibe (21) auf dem Maschinenbett (10) in einer vorbestimmten Richtung (A) anzutreiben,
eine Materialgießeinheit (30), die angrenzend an einen Umfang der Drehscheibe (21) angeordnet ist, um ein Teigmaterial auf eine der unteren Bratschalen (22) zu gießen, wenn die eine der unteren Bratschalen (22) im Verhältnis zu dem Maschinenbett (10) zu einer mit der Materialgießeinheit (30) ausgerichteten Stellung gedreht wird,
eine Backeinheit (40), die angrenzend an den Umfang der Drehscheibe (21) und unmittelbar stromabwärts von der Materialgießeinheit (30) angeordnet ist, um das Teigmaterial auf der einen der unteren Bratschalen (22) zu backen, um eine gebackene Teigplatte zu formen, wenn die eine der unteren Bratschalen (22) im Verhältnis zu dem Maschinenbett (10) so gedreht wird, dass sie mit der Backeinheit (40) ausgerichtet ist, und
eine Wickeleinheit (50), die angrenzend an den Umfang der Drehscheibe (21) und unmittelbar stromabwärts von der Backeinheit (40) angeordnet und funktionsfähig ist, um zu ermöglichen, dass die Platte ein Frühlingsrollenerzeugnis formt, wenn die eine der unteren Bratschalen (22) im Verhältnis zu dem Maschinenbett (10) zu einer mit der Wickeleinheit (50) ausgerichteten Stellung gedreht wird,
**dadurch gekennzeichnet, dass** die Backeinheit (40) zwei obere Bratschalen (45) einschließt, die im Verhältnis zu dem Maschinenbett (10) gedreht werden können derart, dass, wenn die eine der unteren Bratschalen (22) zu einer mit der Backeinheit (40) ausgerichteten Stellung gedreht wird, eine der oberen Bratschalen (45) zu einer Bereitschaftsstellung gedreht wird, die unmittelbar oberhalb der einen der unteren Bratschalen (22) angeordnet ist, um sich anschließend zu einer Arbeitsstellung zu bewegen, so dass sie an die eine der unteren Bratschalen (22) anstößt, um dadurch zu ermöglichen, dass das Teigmaterial gebacken wird, was folglich die gebackene Teigplatte formt, wonach die eine der oberen Bratschalen (45) zu der Bereitschaftsstellung zurückgeführt wird und die andere der oberen Bratschalen (45) zu einer Nichtarbeitsstellung gedreht wird, die gegenüber der einen der unteren Bratschalen (22) und von derselben weg versetzt ist.

2. Vollautomatische Frühlingsrollen-Herstellungsmaschine nach Anspruch 1, **dadurch gekennzeichnet, dass** die Backeinheit (40) ferner einen Positionierungssitz (41), der unbeweglich auf dem Maschinenbett (10) angeordnet ist, und eine aufrechte sich drehende Welle (42), die innerhalb des Positionierungssitzes (41) verzapft ist, einschließt, wobei die oberen Bratschalen (45) jeweils auf zwei gegenüberliegenden Seiten der sich drehenden Welle (42) angeordnet sind.

3. Vollautomatische Frühlingsrollen-Herstellungsmaschine nach Anspruch 2, ferner **dadurch gekennzeichnet, dass** die Backeinheit (40) ferner ein Antriebselement (43) einschließt, um eine Drehung der sich drehenden Welle (42) im Verhältnis zu dem Positionierungssitz (41) anzutreiben.

4. Vollautomatische Frühlingsrollen-Herstellungsmaschine nach Anspruch 3, ferner **dadurch gekennzeichnet, dass** die Backeinheit (40) ferner ein Zylinderanbringungselement (42'), das unbeweglich mit einem oberen Ende der sich drehenden Welle (42) verbunden ist, und zwei Druckzylinder (44), die jeder an dem Zylinderanbringungselement (42') angeordnet sind, um eine Bewegung einer jeweiligen der oberen Bratschalen (45) zwischen der Bereitschaftsstellung und der Arbeitsstellung anzutreiben, einschließt.

5. Vollautomatische Frühlingsrollen-Herstellungsmaschine nach einem der vorhergehenden Ansprüche, **dadurch gekennzeichnet, dass** die Antriebseinheit (23) einen Sternrad-Antriebsmechanismus (232), um eine intermittierende Drehung der Drehscheibe (21) im Verhältnis zu dem Maschinenbett (10) anzutreiben, und einen Motor (231), um den Sternrad-Antriebsmechanismus (232) anzutreiben, einschließt.

6. Vollautomatische Frühlingsrollen-Herstellungsmaschine nach einem der vorhergehenden Ansprüche, **dadurch gekennzeichnet, dass** die Ladevorrichtung (20) ferner mehrere wärmeisolierende Einheiten (24) einschließt, die zwischen der Drehscheibe (21) und den unteren Bratschalen (22) angeordnet sind, wobei jede der wärmeisolierenden Einheiten (24) mehrere Bakelitblöcke (241), die unbeweglich auf der Drehscheibe (21) angeordnet sind, mehrere Stützpfosten (242), die jeweils und unbeweglich an den Bakelitblöcken (241) angeordnet sind, und einen Ladesitz (243), der unbeweglich an den Stützpfosten (242) angeordnet ist, einschließt, um eine entsprechende der unteren Bratschalen (22) zu stützen.

7. Vollautomatische Frühlingsrollen-Herstellungsmaschine nach einem der vorhergehenden Ansprüche, **dadurch gekennzeichnet, dass** jede der oberen Bratschalen (45) zur Außenseite der Drehscheibe (21) angeordnet ist, wenn sie sich in der Nichtarbeitsstellung befindet.

8. Vollautomatische Frühlingsrollen-Herstellungsmaschine nach einem der vorhergehenden Ansprüche, **dadurch gekennzeichnet, dass** die Wickeleinheit (50) Folgendes einschließt:
einen Anbringungssitz (51), der unbeweglich auf dem Maschinenbett (10) angebracht ist,
einen Gleitsitz (52), der beweglich auf dem Anbringungssitz (51) angebracht ist,
ein Antriebselement (53), um den Gleitsitz (52) anzutreiben, dass er sich in Horizontalrichtung auf dem Anbringungssitz (51) bewegt,
einen sich drehender Sitz (54), der drehbar auf dem Gleitsitz (52) angeordnet und um eine geneigte Achse (B) drehbar ist, wobei der sich drehende Sitz (54) zusammen mit dem Gleitsitz (52) im Verhältnis zu dem Anbringungssitz (51) bewegt werden kann, und
mehrere Rollstangen (55) in gleichem Abstand, die an dem sich drehenden Sitz (54) verzapft sind und sich in Radialrichtung in Bezug auf die geneigte Achse erstrecken derart, dass eine Baugruppe aus dem Gleitsitz (52), dem sich drehenden Sitz (54) und den Rollstangen (55) im Verhältnis zu dem Anbringungssitz (51) bewegt werden kann zwischen einer ersten und einer zweiten Stellung, wobei eine Bewegung der Baugruppe aus dem Gleitsitz (52), dem sich drehenden Sitz (54) und den Rollstangen (55) von der ersten Stellung zu der zweiten Stellung zum Formen des Frühlingsrollenerzeugnisses aus der Platte führt, wenn sich die Platte in Reibungsberührung mit einer der Rollstangen (55) befindet.

9. Vollautomatische Frühlingsrollen-Herstellungsmaschine nach Anspruch 8, die ferner eine Hebeeinheit (60) umfasst, die Folgendes einschließt:
eine Führungsplatte (61), die unbeweglich auf dem Anbringungssitz (51) angeordnet ist und eine abgestufte Führungsfläche (613) hat, wobei die Führungsfläche (613) ein erstes Ende (614), das der ersten Stellung entspricht, und ein zweites Ende (615) das dem ersten Ende (614) gegenüberliegt und oberhalb desselben angeordnet und der zweiten Stellung entspricht, hat,
mehrere Positionierungselemente (62), die verschiebbar auf dem sich drehenden Sitz (54) angeordnet sind und es ermöglichen, dass die Rollstangen (55) jeweils an denselben verzapft angeordnet werden,
mehrere Führungsrollen (63), die jeweils und schwenkbar an unteren Enden der Positionierungselemente (62) angeordnet sind, wobei die Führungsrollen (63) eine nach der anderen an der Führungsfläche (513) bewegt werden können, und
mehrere Federn (64), um die Führungsrollen (63) vorzuspannen, so dass sie jeweils die eine der Rollstangen (55) in eine Berührung mit einer Baugruppe aus der Platte und der einen der unteren Bratschalen (22) bewegen.

10. Vollautomatische Frühlingsrollen-Herstellungsmaschine nach Anspruch 9, ferner **dadurch gekennzeichnet, dass** die Hebeeinheit (60) ferner einen Druckzylinder (65) einschließt, der auf dem Gleitsitz (52) angeordnet und funktionsfähig ist, um die eine der Rollstangen (55) von der einen der unteren Bratschalen (22) zu entfernen, kurz bevor die Baugruppe aus dem Gleitsitz (52), dem sich drehenden Sitz (54) und den Rollstangen (55) von der zweiten Stellung zu der ersten Stellung bewegt wird.

## Revendications

1. Machine entièrement automatique de fabrication de pâté impérial comprenant :
un lit de machine (10) ;
un dispositif de chargement (20) incluant un disque rotatif (21) disposé avec faculté de rotation sur ledit lit de machine (10), une pluralité de plateaux à frire inférieurs équidistants (22) disposés sur ledit disque rotatif (21), et une unité d'entraînement (23) opérationnelle pour entraîner une rotation intermittente dudit disque rotatif (21) sur ledit lit de machine (10) dans une direction prédéterminée (A) ;
une unité de versement de substance (30) disposée adjacente à une périphérie dudit disque rotatif (21) destinée à verser une substance de pâte sur l'un desdits plateaux à frire inférieurs (22) lorsque l'un desdits plateaux à frire inférieurs (22) est mis en rotation par rapport audit lit de machine (10) vers une position alignée avec ladite unité de versement de substance (30) ;
une unité de cuisson (40) disposée adjacente à ladite périphérie dudit disque rotatif (21) et immédiatement en aval de ladite unité de versement de substance (30) permettant de cuire la substance de pâte sur l'un desdits plateaux à frire inférieurs (22) pour former une feuille de pâte cuite lorsque l'un desdits plateaux à frire inférieurs (22) est mis en rotation par rapport audit lit de machine (10) pour être aligné avec ladite unité de cuisson (40) ; et
une unité d'enveloppement (50) disposée adjacente à ladite périphérie dudit disque rotatif (21) et immédiatement en aval de ladite unité de cuisson (40) et opérationnelle pour permettre à ladite feuille de former un produit de pâté impérial lorsque l'un desdits plateaux à frire inférieurs (22) est mis en rotation par rapport audit lit de machine (10) vers une position alignée avec ladite unité d'enveloppement (50) ;
**caractérisée en ce que** ladite unité de cuisson (40) inclut deux plateaux à frire supérieurs (45) pouvant être mis en rotation par rapport audit lit de machine (10) de telle sorte que, lorsque l'un desdits plateaux à frire inférieurs (22) est mis en rotation vers une position alignée avec ladite unité de cuisson (40), l'un desdits plateaux à frire supérieurs (45) est mis en rotation vers une position d'attente disposée directement au-dessus du un desdits plateaux à frire inférieurs (22) pour se déplacer ultérieurement vers une position de travail de façon à buter contre l'un desdits plateaux à frire inférieurs (22) pour permettre ainsi la cuisson de la substance de pâte, formant ainsi la feuille de pâte cuite, après quoi l'un desdits plateaux à frire supérieurs (45) est renvoyé vers la position d'attente, et l'autre desdits plateaux à frire supérieurs (45) est mis en rotation vers une position de non-travail qui est désalignée et en éloignement du un desdits plateaux à frire inférieurs (22).

2. Machine entièrement automatique de fabrication de pâté impérial selon la revendication 1, **caractérisée en ce que** ladite unité de cuisson (40) inclut en outre un siège de positionnement (41) disposé fixement sur ledit lit de machine (10), et un arbre rotatif debout (42) tourillonnées au sein dudit siège de positionnement (41), lesdits plateaux à frire supérieurs (45) étant disposés respectivement sur deux côtés opposés dudit arbre rotatif (42).

3. Machine entièrement automatique de fabrication de pâté impérial selon la revendication 2, **caractérisée en ce que** ladite unité de cuisson (40) inclut en outre un organe d'entraînement (43) permettant d'entraîner la rotation dudit arbre rotatif (42) par rapport audit siège de positionnement (41).

4. Machine entièrement automatique de fabrication de pâté impérial selon la revendication 3, **caractérisée en outre en ce que** ladite unité de cuisson (40) inclut en outre un organe de montage de cylindre (42') raccordé fixement à une extrémité supérieure dudit arbre rotatif (42), et deux cylindres de pression (44) chacun disposé sur ledit organe de montage de cylindre (42') permettant d'entraîner le mouvement de l'un respectif desdits plateaux à frire supérieurs (45) entre ladite position d'attente et ladite position de travail.

5. Machine entièrement automatique de fabrication de pâté impérial selon l'une quelconque des revendications précédentes, **caractérisée en ce que** ladite unité d'entraînement (23) inclut un mécanisme d'entraînement à croix de Malte (232) permettant d'entraîner une rotation intermittente dudit disque rotatif (21) par rapport audit lit de machine (10), et un moteur (231) permettant d'entraîner ledit mécanisme d'entraînement à croix de Malte (232).

6. Machine entièrement automatique de fabrication de pâté impérial selon l'une quelconque des revendications précédentes, **caractérisée en ce que** ledit dispositif de chargement (20) inclut en outre une pluralité d'unités thermoisolantes (24) disposées entre ledit disque rotatif (21) et lesdits plateaux à frire inférieurs (22), chacune desdites unités thermoisolantes (24) incluant une pluralité de blocs en bakélite (241) disposés fixement sur ledit disque rotatif (21), une pluralité de montants de support (242) disposés respectivement et fixement sur lesdits blocs en bakélite (241), et un siège de chargement (243) disposé fixement sur lesdits montants de de support (242) pour supporter l'un correspondant desdits plateaux à frire inférieurs (22).

7. Machine entièrement automatique de fabrication de pâté impérial selon l'une quelconque des revendications précédentes, **caractérisée en ce que** chacun desdits plateaux à frire supérieurs (45) est disposé vers l'extérieur dudit disque rotatif (21) lorsqu'il est en position de non-travail.

8. Machine entièrement automatique de fabrication de pâté impérial selon l'une quelconque des revendications précédentes, **caractérisée en ce que** ladite unité d'enveloppement (50) inclut :
un siège de montage (51) disposé fixement sur ledit lit de machine (10) ;
un siège de glissement (52) disposé de façon amovible sur ledit siège de montage (51) ;
un organe d'entraînement (53) permettant d'entraîner ledit siège de glissement (522) pour qu'il se déplace horizontalement sur ledit siège de montage (51) ;
un siège rotatif (54) disposé avec faculté de rotation sur ledit siège de glissement (52) et pouvant être mis en rotation autour d'un axe incliné (B), ledit siège rotatif (54) pouvant se déplacer conjointement avec ledit siège de glissement (52) par rapport audit siège de montage (51) ; et
une pluralité de tiges de roulement équidistantes (55) tourillonnées sur ledit siège rotatif (54) et s'étendant radialement par rapport à l'axe incliné de telle sorte qu'un ensemble dudit siège de glissement (52), dudit siège rotatif (54) et desdites tiges de roulement (55) est mobile par rapport audit siège de montage (51) entre les première et seconde positions, un mouvement de l'ensemble dudit siège de glissement (52), dudit siège rotatif (54) et desdites tiges de roulement (55) de la première position à la seconde position conduisant à la formation du produit de pâté impérial à partir de ladite feuille lorsque ladite feuille est en contact de frottement avec l'une desdites tiges de roulement (55).

9. Machine entièrement automatique de fabrication de pâté impérial selon la revendication 8, comprenant en outre une unité de levage (60) qui inclut :
une plaque de guidage (61) disposée fixement sur ledit siège de montage (51) et ayant une surface de guidage à paliers (613), ladite surface de guidage (613) ayant une première extrémité (614) correspondant à la première position, et une seconde extrémité (615) opposée à et disposée au-dessus de ladite première extrémité (514) et correspondant à la seconde position ;
une pluralité d'organes de positionnement (62) disposés avec faculté de glissement sur ledit siège rotatif (54) et permettant de disposer lesdites tiges de roulement (55) tourillonnées dessus respectivement ;
une pluralité de rouleaux de guidage (63) disposés respectivement et avec faculté de pivotement sur des extrémités de dessous desdits organes de positionnement (62), lesdits rouleaux de guidage (63) étant mobiles sur ladite surface de guidage (513) un à la fois ; et
une pluralité de ressorts (64) permettant de solliciter lesdits rouleaux de guidage (63) respectivement pour déplacer l'une desdites tiges de roulement (55) en contact avec un ensemble de ladite feuille et du un desdits plateaux à frire inférieurs (22).

10. Machine entièrement automatique de fabrication de pâté impérial selon la revendication 9, **caractérisée en outre en ce que** ladite unité de levage (60) inclut en outre un cylindre de pression (65) disposé sur ledit siège de glissement (52) et opérationnel pour enlever l'une desdites tiges de roulement (55) du un desdits plateaux à frire inférieurs (22) juste avant que l'ensemble dudit siège de glissement (52), dudit siège rotatif (54) et desdites tiges de roulement (54) soit déplacé de ladite seconde position à ladite première position.
